# EUROPEAN PATENT APPLICATION

(11) **EP 4 825 579 A1**
(43) Date of publication of application: **21.10.2026**
(21) Application number: 24902327.6
(22) Date of filing: 11.10.2024
(51) Int. Cl.: B32B 27/02, B32B 27/12

(54) **ANNULAR ELASTIC WOVEN TAPE AND PRODUCTION METHOD THEREFOR**

(30) Priority: 13.12.2023 CN 202311708819
(71) Applicant: DONGGUAN NEW HORIZON ELASTIC FABRIC CO., LTD., Guangdong 511771 (CN)
(72) Inventor: ZHANG, Haitao, Dongguan, Guangdong 511771 (CN); HU, Junyan, Dongguan, Guangdong 511771 (CN); ZHA, Jinlian, Dongguan, Guangdong 511771 (CN); YUAN, Huiling, Dongguan, Guangdong 511771 (CN); CHEN, Daosheng, Dongguan, Guangdong 511771 (CN); ZHANG, Xinao, Dongguan, Guangdong 511771 (CN); LI, Yanhu, Dongguan, Guangdong 511771 (CN); CHEN, Peizhu, Dongguan, Guangdong 511771 (CN); ZHANG, Qi, Dongguan, Guangdong 511771 (CN)
(74) Representative: Jacobi, Markus Alexander
(86) International application number: PCT/CN2024/124132
(87) International publication number: WO 2025/123901

(57) **Abstract**

The present invention discloses a circular fabric band, comprising a body part and a connecting part, wherein the body part has two ends, A and B, and the two ends are respectively forked into an upper layer Au and a lower layer Al of the same length (L1) and an upper layer Bu and a lower layer Bl of the same length; the connecting part comprises: (a) an upper fabric a, formed by butt-jointing Au and Bu, (b) at least one layer of adhesive film b, (c) a reinforcing layer fabric c, and (d) a lower fabric d, formed by butt-jointing Al and Bl; and the layers of the connecting part are bonded together by an adhesive film to form an circular ring-shaped band with the body part; thereby, a circular band with a flat and smooth seam, elastic, breathable and moisture-permeable is obtained. The method improves the factors affecting wearing comfort such as little or no elasticity, airtightness and difficulty in permeating sweat in the connecting part produced by the traditional process, and at the same time, the observable lines of the connecting part is reduced from four to three while meeting the strength required for wearing and more convenient for industrial mass production.

## Description

### TECHNICAL FIELD

The invention relates to the technical field of manufacturing clothing accessories. More particularly, it relates to a ring-shaped fabric band which is elastic and breathable with two terminals seamlessly interconnected and a method of production thereof.

### BACKGROUND ART

Consumers of clothing articles demand for comfort, personalization and aesthetics, which in turn spurs innovation in the materials, designs and processing techniques of fabric bands used as accessories in clothing.
1. Comfort: Consumers like elastic bands that have a higher level of comfort, including better fit, softness and breathability, and also look for a more refined, high-end and smooth texture.
2. Elasticity: Consumers like elastic bands that have better elasticity to meet the needs of different body shapes and movements.
3. Durability: Consumers also like elastic bands that have a long service life.
4. Personalization and aesthetics: Consumers require fabric the elastic band to meet their personalized needs, such as different colors, patterns and sizes.
5. Environmentally friendly: Both consumers and manufacturers may also require that fabric elastic bands be environmentally friendly.

The fabric band, used as an accessory on clothing products, is initially produced in a continuous linear form. For a large category of applications, the linear band is cut to a suitable length, and the two ends of the resulting linear strip are interconnected to form a ring-shaped circular component which has a certain degree of elasticity and pressure force. Typical applications are the waistband on underwear or the bottom band of a bra. The traditional process is to sew the two ends of the elastic band together. However, this process has room for improvement in terms of wearing experience. For example, (1) the stitches of the seams cause a scratchy touch to the skin, (2) the seams also affect the appearance, and (3) it is very difficult to accurately align the graphic design pattern on the surface across the seam during the production process.

The production process of seamless bands has also emerged. Some manufacturers have introduced newer processes such as ultrasonic welding and hot pressing to further improve the quality and performance of products. The industry conventionally uses the following two processes:
1. Hot-melt lamination technology: It is a technology that uses high temperature and high pressure to press two or more materials together. In seamless hot-melt processed waistbands, hot-melt lamination technology is used to fuse fabrics, elastic fibers and other materials together to form a tightly combined circular elastic band. However, the lamination surface is perpendicular to the fracture surface. During the stretching process, the end spandex is prone to shrinkage and cannot be reset, known as the "root shrinkage" phenomenon in the industry.
2. Ultrasonic welding technology: Ultrasonic welding technology is a technology that uses ultrasonic vibrations to connect two materials together. In seamless hot-melt processed waistbands, ultrasonic welding technology is used to weld fabrics, elastic fibers and other materials together to form a seamless circular elastic band.

The above two processing technologies usually based on one of the two structural arraignments: alignment bonding structure or offset bonding structure. The alignment bonding is a method in which the two ending parts are butt aligned and connected at a specific position. In this method, the positioning and joining between the joining parts can theoretically allow precise and accurate alignment to ensure the integrity of the design pattern on the surface over the connection line, but in practice the alignment bonding method usually requires manual or machine alignment and joining, which requires the operator to have certain skills and professional knowledge. At the same time, alignment bonding is prone to insufficient bonding strength and breakage during use because the bonding surface is perpendicular to the processing pressure direction. On the other hand, in the offset bonding method, the two ending parts are connected with a joining surface where an overhanging layer (say an upper layer) from one ending part is laying down on an overhanging layer (say a bottom layer) from from the other ending part. In this method, the positioning and joining between the joining parts can be automatically determined, and precise alignment is not required. Ultrasonic welding technology can solve the problem of pattern alignment well if a alignment-welding structure is used in the production. However, due to the thickness and elasticity of the band, the welding working surface is perpendicular to the ultrasonic welding surface, so the welding strength is not enough and is prone to breakage after undergoing repeated stretching actions. Hot melt pressing technology fuses fabrics and elastic fibers and other materials together, but the laminated area is not elastic or only slightly elastic. Furthermore, the use of an adhesive membrane also makes the laminated area airtight, blocking the transmission of sweat. In addition, the strict requirements for design pattern alignment greatly affect the production efficiency.

Therefore, in order to improve the above-mentioned problems encountered in the production process of seamless circular elastic bands, such as insufficient elasticity in the laminated area, airtightness, root shrinkage, and low breaking strength, the present invention discloses the following solution.

### SUMMARY OF THE INVENTION

In response to the common problems mentioned above, such as the feel, the appearance of the pattern, and the fastness of connection, which are currently encountered in the design and processing of seamless circular elastic fabric bands, the present invention discloses a new method which is easy to operate and convenient for aligning design patterns. The produced circular elastic band has a better feel, representing a novel type of circular elastic band with balanced tensile breaking strength, elasticity, breathability and moisture permeability and other properties.

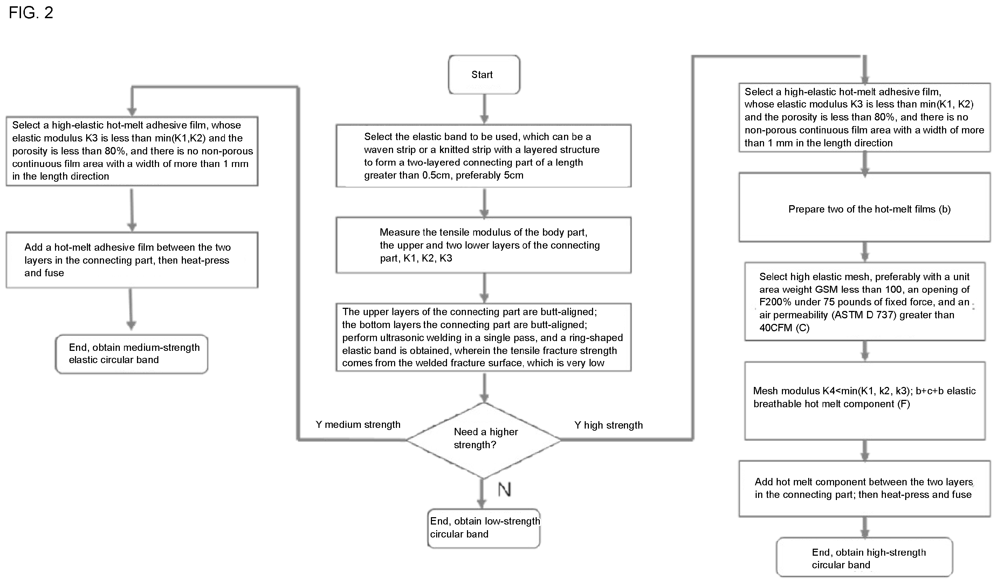

FIG. 2 describes the process of designing and implementing a method for elastic and breathable circular fabric bands. It can be used to produce circular bands with three different levels of tensile breaking strength: low, medium and high, which can be selected according to one's requirements for the final product on tensile strength.

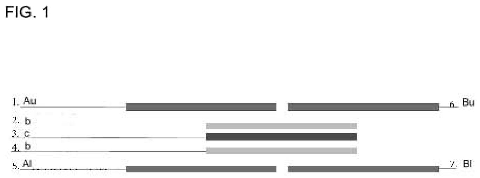

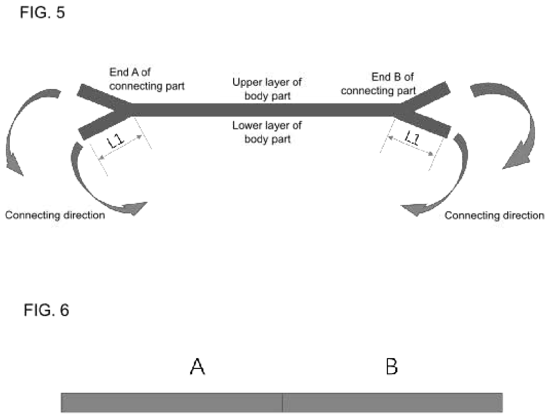

The circular elastic band is a seamless ring-shaped elastic band formed by hot-melt bonding or ultrasonic welding from a linear open-loop elastic strip. It is characterized in that: (1) the band comprises two parts, a body part and a connecting part, where the two ends of the band (end A, end B) form the connecting part, having a length of L1. Each end has two completely or partially separated layers of elastic fabrics extending from the body part (referred to as upper elastic fabric Au, Bu, lower elastic fabric (Al, Bl )) as shown in FIG. 5; (2) the upper elastic fabric (Au) at the A end and the upper elastic fabric (Bu) at the B end are welded end-to-end tightly and seamlessly, and the lower elastic fabric (Al) at the A end and the lower elastic fabric (Bl) at the B end are welded end-to-end tightly and seamlessly. The schematic diagram end-to-end welding for one of the layers is shown in FIG. 6; (3) the elastic breathable hot melt component F can be added between the upper and lower elastic fabrics as needed, or alternatively, only hot-melt adhesive film b is used, as shown in FIG. 1; the alignment-welding of the upper and lower layers results a ring-shaped band with a smooth, elastic, breathable connecting seam; when sufficient tensile strength is required to meet the use requirements, the alignment-welding structure is more convenient for aligning the design pattern than the offset welding structure, and at the same time, it can reduce a visible seam line, especially on a light-colored band, because when an elastic breathable hot melt component F is added, with the offset-welding structure, 4 seam lines can be observable, while with the alignment-welding structure, only 3 seam lines can be seen as the upper and lower seams are aligned. This further improves the aesthetics of the product.

Before designing the circular seamless band, it is necessary to measure properties of the matching materials. For the selected band, the elastic modulus (K1, K2, K3) of the body part and the upper and lower layers of the connecting part are measured respectively, and the length L1 of the connecting part is made greater than 0.5cm, preferably 4 or 5cm, which is suitable to perform alignment and ultrasonic welding in production. During the operation, the two upper elastic fabrics of the band are aligned with each other; the two lower elastic fabrics of the band are aligned with each other; and they are all ultrasonically welded in a single process to obtain a circular elastic band. But at this time, the tensile fracture strength is only coming from the fracture surface welding, and the tensile fracture strength is thus very low due to the relatively small welding area. If some special designs require such an effect of low strength, this can also possibly be the end product.

If there are higher requirements for tensile fracture, an elastic hot melt component can be used in the method according to the present invention. The specific design is: the elastic breathable hot melt component F is composed of at least one layer of adhesive film b, preferably a high-elastic hot melt adhesive film b, which can be further compounded with a reinforcing layer fabric (elastic mesh fabric) and another layer of high-elastic hot melt adhesive film b to form an elastic breathable hot melt component F, and when applied in lamination, its width is the same as or less than the width of the ring-shaped band, the length is greater than 2 cm and less than 2 times of L1 minus 0.5 mm, and the elastic modulus K4 of the hot melt adhesive film b is less than any of elastic modulus K1, K2, or k3.

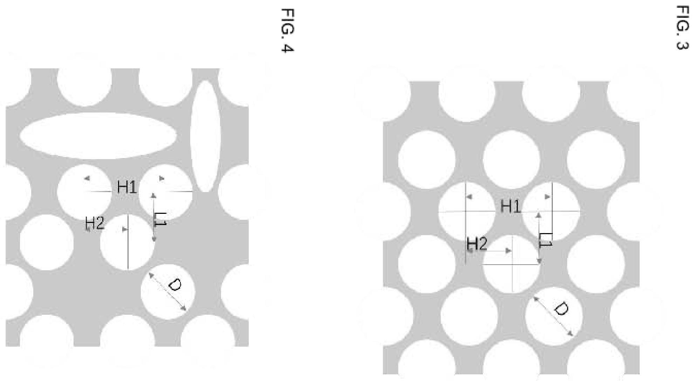

To deal with the common known existing issue that elasticity is lost or significantly reduced during the bonding process, the present application has conducted in-depth exploration and proposes following solutions:
(1) Before lamination, the tensile fracture characteristics of the film material are measured to understand the elongation at break of the film. Since it is estimated that the change in normal human body size due to different body positions during wearing is less than 20%, and the pre-deformation due to the need for pressure during wearing is usually less than 30%, the inventor uses the tensile force on the fabric band as 5 kgf and the force that causes 40% deformation elongation change for the test criteria. Considering the possible strength loss of the film during punching and hot melt lamination, it is required that the elongation at break of the non-porous single film is greater than 150% and the fracture strength is greater than 2 kgf. At present, many film suppliers in the industry can supply such hot melt films, such as Zheshibang , Baimeitie, Denais, and some other companies.
(2) It is certain that the continuous non-porous film will affect the air permeability and elasticity of the area after bonding, and will also affect the sweat transfer when wearing. Therefore, in this invention, the hot melt film is perforated, and the diameter of the pores is required to be 1mm to 5mm, preferably 2mm, the film porosity rate is less than 85%, and the hot melt adhesive film b doesn't have any non-porous film area with a width of more than 1mm in the length direction of the elastic band, so as to reduce the influence of the hot melt film on the opening of the band in the length direction, and at the same time ensure the tensile strength under lamination; as shown in FIG. 3.
(3) For customized membranes, the shapes of the pores can be diverse as shown in FIG. 4.
(4) The hot melt adhesive film does not have any non-porous continuous film area with a width of more than 1 mm along the width direction of the hot melt adhesive film;
(5) In order to further enhance the tensile strength, maintain air permeability and moisture permeability and improve the elastic recovery of the laminated area, an elastic mesh fabric is further added. The elastic mesh fabric is a thin elastic mesh fabric, preferably with a unit area weight GSM less than 100, an opening greater than 200% under a constant force of 7.5 pounds, and an air permeability (ASTM D 737) greater than 40 CFM. The thin elastic mesh fabric can be made of nylon spandex thin mesh fabric with a spandex content greater than 20%, preferably 30%. Or it is a polyester spandex thin mesh fabric with a spandex content greater than 20%, preferably 30%.

In this way, a ring-shaped seamless elastic band can be obtained with good elasticity, air permeability and aesthetics.

### BRIEF DESCRIPTION OF THE DRAWINGS

FIG. 1 is a schematic diagram of the seamless lamination band structure of the present invention;
FIG. 2 is a process flow chart of the design and implementation method of an elastic and breathable butt-aligned ring-shaped band;
FIG. 3 is a schematic diagram, showing the pore size on a typical high elastic film;
FIG. 4 is a schematic diagram, showing the pore dimensions on a customized high elastic film;
FIG. 5 is a schematic diagram, showing the connecting direction of the upper and lower layers of elastic fabric;
FIG. 6 shows a schematic diagram, showing the butt connection of a single-layer elastic fabric.

### DETAILED DESCRIPTION

The technical solution of the present invention is further described in detail below in conjunction with the accompanying drawings and specific embodiments . The described specific embodiments are only used to explain the present invention and are not intended to limit the scope of the present invention .

### Example 1: Woven Band

### 1.1 Fabric Band preparation

A fabric band (article number T7B511/38/FCT/YD) produced by Dongguan Runxin Elastic Fabric Co., Ltd. was selected. It is a fabric strip with a width of 38mm and a thickness of 1.61mm, forked at ends. The loop length is 800mm and the length of the forked portion is 112mm. The modulus of the body part and the upper and lower elastic fabrics of the connecting part were measured according to the standard ISO20932-1 method, and stretched at a speed of 500mm/min on a Zwick tensile machine with a constant force of 5kgf. Under 40% elongation, the modulus of the band body part was 0.739Kgf, the modulus of the upper layer of the forked part was 0.325 Kgf, and the modulus of the lower layer of forked part was 0.327 Kgf. There are marking lines on both ends of the upper and lower layers of the connecting part.

### 1.2 Preparation of hot melt adhesive film

Select Denais 1575-002 high temperature and high elastic hot melt adhesive film and make pores as shown in FIG. 3, with a pore diameter of 2.5mm , H1=3.5mm, H2=1.87mm, L1=1.87mm (C1 or C3).

### 1.3 Preparation of hot melt components

- Use the high elastic mesh fabric (Article No.: 1205281) produced by Best Pacific Textile Co., Ltd., which is composed of 74% nylon and 26% spandex high elastic mesh fabric.
- Take the perforated hot melt adhesive film prepared in 1.2 and cut it into adhesive fragments (to be used as adhesive film b) of a 38mm length according to the width of the band for later use.
- Form a three-layer sandwich with two layers of the porous hot melt adhesive films and a layer of the high elastic mesh fabric (the elastic mesh cloth is selected as the reinforcing layer fabric c) sandwiched therebetween. The sandwich layers are then bonded by flat plate hot pressing at 120°C to form a hot melt assembly F (adhesive film b + reinforcing layer fabric c + adhesive film b) and further cut into 38mm width for later use.

### 1.4 Circular blank band preparation

- The band is welded along the marking line by ultrasonic wave to form an endless circular blank band.

### 2.1 Process Scheme 1: with a single membrane(C1):

- Select a highly elastic hot-melt adhesive film as the adhesive film b, cut a 40 mm long adhesive film, and place it in between separated layers in the circular (ring-shaped) blank band prepared in 1.4, and bond the upper and lower layers of the band together by 145°C flat-plate hot pressing to obtain an elastic and breathable ring-shaped elastic band.

### 2.2 Process Scheme 2: Membrane + mesh + membrane scheme (hot melt component F):

- Select hot melt component F, cut a 40 mm long adhesive film, and place it in between the separated layers in the circular blank band prepared in 1.4, and bond the upper and lower layers of the band together by 145°C flat plate hot pressing to obtain an elastic and breathable ring-shaped elastic band.

The elasticity of the above-mentioned bands was tested according to ISO 20932-1 standard and the results are summarized as follows:

| Woven Fabric | Scheme 1 | Scheme 2 |
|---|---|---|
| Thickness(mm) | 1.61 | 1.61 |
| Band body modulus (mm) | 0.739 | 0.739 |
| Band body opening (mm/5kg) | 138 | 138 |
| Upper layer modulus (kgf) | 0.325 | 0.325 |
| Upper layer opening (mm/5kg) | 165 | 165 |
| Lower layer modulus (kgf) | 0.327 | 0.327 |
| Lower layer opening (mm/5kg) | 168 | 168 |
| Adhesive Film modulus (kgf) | 0.238 | 0.461 |
| Elastic Mesh modulus (kgf) | | 0.077 |
| Laminated product modulus (kgf) | 0.977 | 1.277 |
| Laminated product opening (mm/5kg) | 110 | 104 |
| Laminated product thickness (mm) | 1.63 | 1.66 |

From the data, we can see that the thickness of the finished product after bonding is increased compared with the original band body without bonding . $\left(1.66-1.61\right) / 1.61 * 100 % = 3.1 %$

The opening is reduced from 138mm to 104mm. $\left(138-104\right) / 138 * 100 % = 24.6 %$

### Example 2: Knitted Band

Base on Example 1, a knitted band (article number CL7917/64) produced by Dongguan Runxin Elastic Fabric Co., Ltd. was selected. The band is a mesh + solid hemming edges with a width of 64mm, a width of 33mm when folded, and a thickness of 1.49mm. The modulus of the band body and the upper and lower elastic fabric layers/sides were measured according to the standard ISO20932-1 method. The band body was stretched at a speed of 500mm/min with a constant force of 3.6kgf on a Zwick tensile machine. Under 40% elongation, the modulus of the band body was 0.776kgf, the modulus of the upper layer was 0.335 kgf, and the modulus of the lower layer was 0.327 kgf.

Referring to the process of Example 1, an adhesive film b with a width of 33 mm and an elastic breathable hot melt component (F) were prepared.

### 2.1 Process Scheme 1, with a single membrane (adhesive film b):

- Cut the knitted band according to the length required by the actual design;
- Align the ends of the knitted band, and use ultrasonic heat welding to form a preliminary circular knitted band;
- Fold the knitted band along the longitudinal center line, resulting in an upper side and lower side with a hairpin like cross-section and a side opening.
- Take the pre-made adhesive film b ( high elastic hot melt adhesive film ) , cut a 40mm length piece and place it between two folded sides of the knitted band through the side opening and centered over the heat welded connection line, and then bond the upper and lower sides of the knitted band together at 145°C using a flat plate hot press to form an ring-shaped band.

### 2.2 Process Scheme 2, with an elastic breathable hot melt component F:

- Refer to Scheme 1 and select the elastic breathable hot melt component F, cut to 40mm length, and place it between two folded sides of the knitted band in the same way as described in Scheme 1. Use flat plate hot pressing at 145°C to bond the upper and lower sides of the band together to form a ring-shaped band.

The test data of the circular knitted band is summarized as follows:

| Knitting Fabric | Scheme 1 | Scheme 2 |
|---|---|---|
| Thickness(mm) | 1. 49 | 1. 49 |
| Band body modulus (mm) | 0.776 | 0.776 |
| Band doby opening (mm/ 3.6 kg) | 109 | 109 |
| Upper layer modulus (kgf) | 0.335 | 0.335 |
| Upper layer opening (mm/ 3.6 kg) | 138 | 138 |
| Lower layer modulus (kgf) | 0.327 | 0.327 |
| Lower layer opening (mm/ 3.6 kg) | 148 | 148 |
| Adhesive Film modulus (kgf) | 0.4 | 0.206 |
| Elastic Mesh modulus (kgf) | 0.066 | |
| Laminated product modulus (kgf) | 1.242 | 0.982 |
| Laminated product opening (mm/ 3.6 kg) | 79 | 84 |
| Laminated product thickness (mm) | 1.54 | 1.51 |

From the data, we can see that the thickness of the finished product after bonding is increased compared with the original band body without bonding. $\left(1.54-1.49\right) / 1.49 * 100 % = 3.4 %$

The opening is reduced from 109mm to 79mm. $\left(109-79\right) / 109 * 100 % = 27.5 %$

From the above two examples, it can be concluded that after the woven band and the knitted band are seamlessly bonded, they still have a large opening under the load conditions of 5kgf and 3.6kgf respectively according to the product standard. Compared with the original band body that has not been bonded, it retains at least 70% of the elasticity before processing. The existence of the pores in the design also meets the requirements of moisture permeability and breathability.

Although the preferred embodiments of the present invention have been described above in conjunction with the accompanying drawings, the present invention is not limited to the above-mentioned specific embodiments. The above-mentioned specific embodiments are merely illustrative and not restrictive. Under the guidance of the present invention, ordinary technicians in this field can also make many variations without departing from the scope of the present invention and the protection scope shall be determined by the claims.

## Claims

1. A circular fabric band, comprising a body part and a connecting part, **characterized in that**:
the body part has two ends A and B, which are respectively divided into an A-end upper layer (Au) and an A-end lower layer (Al) of the same length (L1) and an B-end upper layer (Bu) and a B-end lower layer ( Bl ) of the same length;
the connecting part comprises:
(a) an upper fabric (a), formed by butt joining the upper layer(Au) at the A end and the upper layer (Bu) at the B end.
(b) at least one adhesive film (b),
(c) a reinforcement fabric (c), and
(d) a lower layer fabric (d), formed by butt joining the lower layer (Al) at the A end and the lower layer (Bl) at the B end; and
the layers of the connecting part are bonded together by the adhesive film to form a circular fabric band together with the body part.

2. The circular fabric band according to claim 1, **characterized in that** the circular fabric band is formed by seamless hot-melt bonding and/or ultrasonic welding of a linear elastic fabric strip, and the adhesive film is a hot-melt adhesive film, preferably a high-elastic hot-melt adhesive film.

3. The circular fabric band according to claim 1, **characterized in that** the elastic modulus (K1, K2, K3) of the body part and the upper and lower layer of the ends are measured respectively and the connecting part has a length (L1) greater than 0.5 cm, preferably 4 or 5 cm.

4. The circular fabric band according to claim 1, **characterized in that** the elastic breathable hot melt component ( F) is composed of at least one layer of adhesive film (b), preferably a high-elastic hot melt adhesive film, which can be further compounded with the reinforcing layer fabric (c) and another adhesive film (b) to form an elastic breathable hot melt component (F), having a width which is the same as or less than the width of the fabric band, a length which is greater than 2 cm and less than 2 times the length (L1) - 0.5 mm, an elastic modulus K4 which is less than the minimum elastic modulus min (K1, K2, K3), and a tensile strength at break which is greater than 2 kgf; wherein the reinforcing layer fabric is an elastic mesh fabric.

5. The circular fabric band according to claim 1 or 3, **characterized in that** the adhesive film (b) is perforated to improve air permeability and moisture permeability and further improve the elasticity of in the weld area, wherein the porosity rate is less than 85%, and there is no non-porous continuous film area with a width of more than 1 mm in the adhesive film (b) along the length direction of the fabric band.

6. The circular fabric band according to claim 1 , 3 or 4, **characterized in that** the adhesive film (b) does not have any non-porous continuous film region with a width of more than 1 mm in the adhesive film (b) along the width direction of the adhesive film (b).

7. The circular fabric band according to claim 1 or 4, **characterized in that** the reinforcement fabric (c) is a thin elastic mesh, preferably with a grammage per unit area GSM less than 100, an opening greater than 200% under a constant force of 7.5 pounds, and an air permeability (ASTM D 737) greater than 40 CFM .

8. The circular fabric band according to claim 1 , 4 or 7, **characterized in that** the thin elastic mesh is a nylon spandex thin mesh, and the spandex content is greater than 20%, preferably 30%.

9. The circular fabric band according to claim 1 , 4 or 7, **characterized in that** the thin elastic mesh is a polyester-spandex thin mesh, and the spandex content is greater than 20%, preferably 30%.

10. A method for forming an endless circular fabric band, comprising the following steps:
( i ) providing a long linear strip of fabric band, which comprises a plurality of layered portions, wherein the layered portions are separated into an upper and a lower layer of band structure;
(ii) cutting the long fabric band at each layering portion to form a plurality of band segments with two ends being forked into upper and lower layers ;
(iii) bending a band segment so that both ends are butted against each other to form a two-layer structure where the layers are separate;
(iv) placing at least one layer of adhesive film (b) and a reinforcing layer of fabric (c) into a two-layer structure centered on the butting line between the two ends of the fabric band;
(v) performing heat-compression welding to bond the separated two-layer structure with the adhesive film (b) and the reinforcing layer fabric (c) sandwiched there-between, thereby forming an endless circular band.
